# EUROPEAN PATENT APPLICATION

(11) **EP 0 915 263 A1**
(43) Date of publication of application: **12.05.1999**
(21) Application number: 98120528.9
(22) Date of filing: 30.10.1998
(51) Int. Cl.: F16B 47/00

(54) **Suction cup support**

(30) Priority: 04.11.1997 IT TO970966
(71) Applicant: Calligaro, Giuseppe, 10098 Rivoli (Torino) (IT)
(72) Inventor: Calligaro, Giuseppe, 10098 Rivoli (Torino) (IT)
(74) Representative: Aprà, Mario

(57) **Abstract**

The suction cup support includes an elastic diaphragm, a cup-like cover facing the latter and an axial pin which is connected to the diaphragm and passes through the cover.

According to the invention, the cover (13) comprises a hub (13.2) through which the said pin (12) passes and which forms two essentially semicylindrical front cams (13.4).

Attached coaxially to the pin (12) in such a way that it can slide and rotate freely, is a head (14) which carries a counter-hub (14.2) having two rigid fingers (14.4), each of which is in sliding engagement, in the manner of a tappet, against a corresponding front cam (13.4) of the hub (13.2).

Having placed the elastic diaphragm (11) against a smooth surface, the user grips the rotatable head (14) and rotates it through less than 180°. This rotational movement is translated - via the fingers (14.4) which slide against the corresponding front cams (13.4) - into a relative axial sliding movement of the pin (12) which is partially pulled out with respect to the cover (13), while the central zone of the said diaphragm is deformed elastically to form a small cup. A suction force is created between the elastic diaphragm (11) and the surface to which it is fixed, thereby ensuring that the suction cup support (10) is stably and securely attached.

## Description

The present invention relates to a suction cup support.

Suction cup supports which comprise an essentially disc-shaped elastic diaphragm and a cup-like cover which faces the diaphragm, are known. The outer peripheral edge of the diaphragm extends beyond the cover. An axial pin is connected at one end to the diaphragm and passes through the said cover in such a way that it can slide freely. The other end of the pin is connected to a hinged lever. The lever is associated with a cam which bears against the cover. By turning the lever in one direction, the cam causes the pin to be partially pulled out with respect to the cover, thereby causing the diaphragm to deform elastically and form a small cup, the outer peripheral edge of which is held securely in contact with a smooth surface by the cover. The diaphragm adheres to this surface as a result of the suction thus created. By turning the lever in the opposite direction, the diaphragm is returned to its flat rest position, thereby cancelling the suction effect. The suction cup support can then be removed from the smooth surface.

However, suction cup supports of this type do not perform very satisfactorily since the extent to which the diaphragm can be elastically deformed is very limited, so creating only a modest suction force.

Furthermore, these suction cup supports have only one member, formed by the actual body of the lever, from which to suspend items. This considerably limits their practical use.

The main object of the invention is to provide a suction cup support which, when attached by means of suction to a smooth surface, is able to support a relatively heavy load stably and securely, perhaps by means of a plurality of suspension members.

Another object is to provide a suction cup support that can be applied manually, by means of suction, to a smooth surface in a way which is simple and requires no special effort.

A further object is to provide a suction cup support that has a simple structure and is reliable in use.

With these objects in mind, the present invention provides a suction cup support whose essential feature forms the subject of Claim 1.

Further advantageous characteristics are set out in the subordinate claims.

These claims are understood to form an integral part of this document.

A clearer understanding of the invention will be gained by reading the detailed description that follows and by referring to the exemplary drawings attached, in which:
- Fig. 1 is a view in partial section taken on the plane I-I marked in Fig. 2, illustrating the suction cup support according to one embodiment of the invention;
- Fig. 2 is a view in the direction of the arrow II in Fig. 1;
- Fig. 3 is a view in partial section taken on the plane III-III marked in Fig. 1 (only a pin part is illustrated in this section);
- Fig. 4 is a plan view from above of a cover part of the said suction cup support (rotated through approximately 90° with respect to Fig. 2 for reasons of clarity);
- Fig. 5 is a view in the direction of the arrow V in Fig. 4;
- Fig. 6 is a plan view from above of a rotatable head part (in a position such that it can be placed over the cover part shown in Fig. 4, when the suction cup support is in the position illustrated in Fig. 1);
- Fig. 7 is a view in the direction of the arrow VII in Fig. 6.

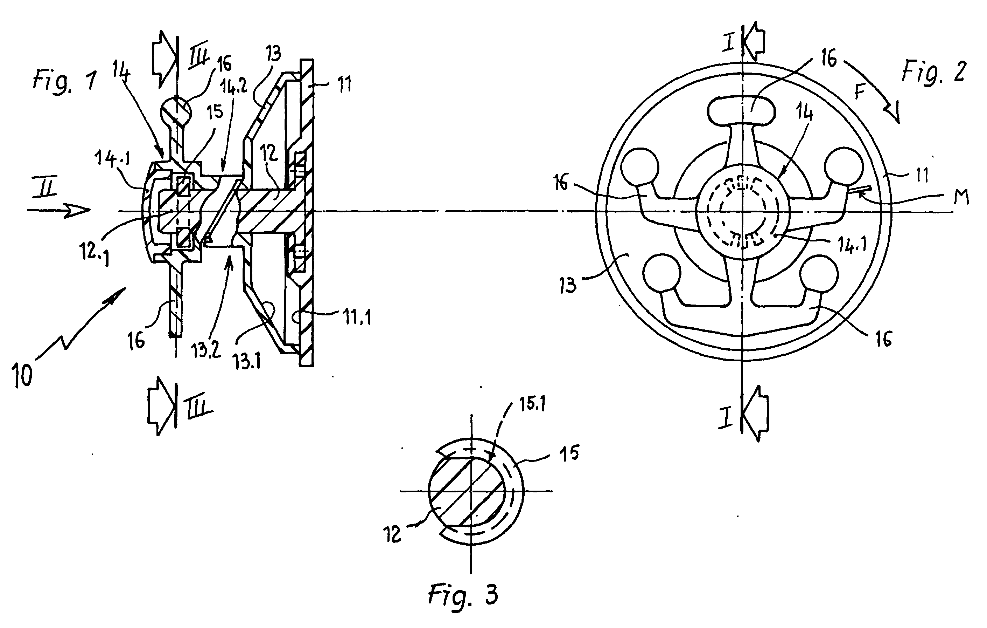

In the drawings, the reference 10 (Fig. 1) denotes, overall, the suction cup support according to one embodiment of the invention.

The said suction cup support 10 comprises an elastic or flexible disc-shaped diaphragm 11, made of rubber or plastic, which is essentially flat when in the rest position (Fig. 1).

An axial pin 12, for example made of plastic, projects out from one face 11.1 of the said diaphragm 11. The said pin 12 is securely attached to the diaphragm 11 by means of an integral foot which is housed in a form and force fit in a corresponding cavity in the said diaphragm.

A rigid, essentially cup-like cover 13, made of plastic for example, is attached coaxially and so that it can slide freely with respect to the said pin 12. The concave face 13.1 of the cover 13 faces the said diaphragm 11 which extends beyond the outer peripheral edge of the said cover.

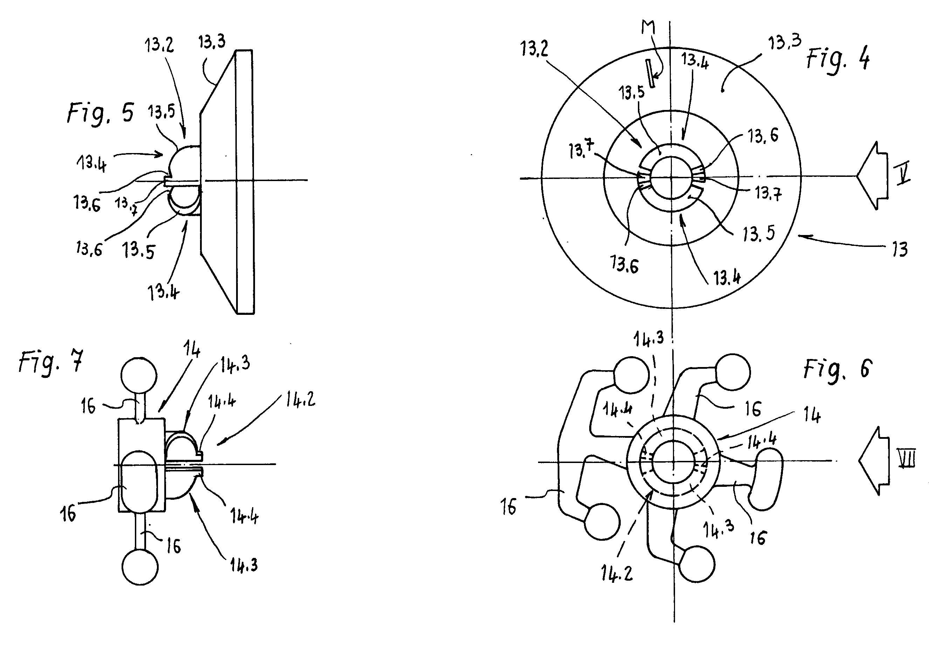

The said cover 13 comprises an integral hub-like central part 13.2 which extends out from its convex face 13.3 and through which the said pin 12 passes. The said hub-like part 13.2 forms two essentially semicylindrical front cams 13.4 (Figs 4, 5) which are axially symmetrical. Each front cam 13.4 has two ramps, each with a different inclination to the other and denoted 13.5 and 13.6 respectively, and an end step 13.7. The first ramp 13.5, which is the longer of the two, runs upwards from the face 13.3 of the cover 13 towards the second, shorter, ramp 13.6 which runs downwards and is adjacent to the said step 13.7.

Attached coaxially to the free end 12.1 of the said pin 12, in such a way that it can slide and rotate freely, is a ring-shaped head 14, for example made of plastic. The said rotatable head 14 is prevented from slipping axially off the pin 12 by means of a C-shaped stop ring 15 (Fig. 3) which is inserted in a corresponding groove 15.1 in the form of an arc of a circle around the pin 12. This shape of groove 15.1, i.e. open on only one part of the surface of the pin 12, means that the production of the mould for the said pin is considerably simplified. The reference 14.1 denotes a cap, for example made of plastic.

The said head 14 carries a plurality of integral arms 16 which essentially lie in a plane perpendicular to the axis of the pin 12.

A counter-hub 14.2 (Figs 6, 7) is provided, made in one piece with the said head 14 and extending towards the cover 13. The said counter-hub 14.2 has two essentially semicylindrical parts 14.3 which are axially symmetrical and similar to but mirror images of the respective front cams 13.4 of the said hub 13.2. Each part 14.3 of the counter-hub 14.2 has a rigid axial finger 14.4 at its end furthest from the head 14. Each finger 14.4 is in sliding engagement, in the manner of a tappet, against a corresponding front cam 13.4.

It will be noted that, via the pin 12, the ring 15 and the rotatable head 14, the elastic force of the diaphragm 11 presses the said fingers 14.4 into sliding contact against the said front cams 13.4 of the hub 13.2.

The way in which the diaphragm support 10 works is immediately evident.

Starting from the rest position illustrated in Fig. 1, after having placed the free face of the elastic diaphragm 11 against a smooth surface, the user grips the rotatable head 14 by means of the arms 16 and rotates it through less than 180° (in a clockwise direction, Fig. 2, arrow F). This rotational movement is translated - via the fingers 14.4 which slide against the respective ascending ramps 13.5 of the front cams 13.4 - into a relative axial sliding movement of the pin 12, which is partially pulled out with respect to the cover 13. The latter keeps the free outer edge of the diaphragm 11 securely in contact with the said smooth surface, while the central zone of the said diaphragm is deformed elastically to form a small cup as a result of the axial sliding movement of the pin 12. A suction force is thus created between the elastic diaphragm 11 and the surface to which it is fixed, thereby ensuring that the suction cup support 10 is stably and securely attached.

By continuing to rotate the head 14, the fingers 14.4 engage with the respective descending ramps 13.6 of the front cams 13.4 and abut against the end steps 13.7. The head 14 is thereby prevented from rotating further.

In this position, any reverse movement of the said head 14 is reliably prevented while the suction cup support 10 is securely and stably fixed to the said surface. The arms 16 can, for example, be used to hang a plurality of items.

To indicate the correct position in which to fix the suction cup support 10 to the application surface, the cover 13 is provided with a marker (a notch M) on its outer convex face, this marker being for example positioned at the top (i.e. at 12 o'clock) when the suction cup support 10 is about to be applied to the wall. In this position, once the suction cup support 10 has been fixed, the support arms 16 will be in their correct position of use (Fig. 2) so that objects can be suspended from them.

By carrying out the same operation in reverse, the user can return the said elastic diaphragm 11 to its flat rest position, thereby cancelling the suction effect, and the suction cup support 10 can then be removed from the said application surface.

## Claims

1. Suction cup support, including an essentially disc-shaped elastic diaphragm and a cup-like cover, a concave face of which faces the said diaphragm, the outer peripheral edge of the diaphragm extending beyond the cover, and an axial pin which is connected at one end to the diaphragm and which passes through the cover in such a way that it can slide freely, characterized in that the said cover (13) comprises a hub-like central part (13.2), through which the said pin (12) passes, which extends out from its other face (13.3) and which forms two essentially semicylindrical front cams (13.4), and in that, attached coaxially to the free end (12.1) of the said pin (12), in such a way that it can slide and rotate freely, is a head (14) which is prevented from slipping axially off the pin (12) and carries a counter-hub (14.2) which extends towards the cover (13) and has two rigid fingers (14.4), each of which is in sliding engagement, in the manner of a tappet, against a corresponding front cam (13.4) of the hub (13.2) so that the user, after having placed the free face of the elastic diaphragm (11) against a smooth surface, grips the rotatable head (14) and rotates it through less than 180°, this rotational movement being translated - via the fingers (14.4) which slide against the corresponding front cams (13.4) - into a relative axial sliding movement of the pin (12), which is partially pulled out with respect to the cover (13), the latter keeping the free outer edge of the diaphragm (11) securely in contact with the said smooth surface while the central zone of the said diaphragm is deformed elastically to form a small cup, thus creating a suction force between the elastic diaphragm (11) and the surface to which it is fixed, thereby ensuring that the suction cup support (10) is stably and securely attached, whereas, by carrying out the same operation in reverse, the user can return the said elastic diaphragm (11) to its flat rest position, thereby cancelling the suction effect and allowing the suction cup support (10) to be removed from the said surface.

2. Suction cup support according to Claim 1, characterized in that each front cam (13.4) has two ramps (13.5, 13.6), each with a different inclination to the other, and an end step (13.7), and in that the first ramp (13.5), which is the longer of the two, runs upwards from the said other face (13.3) of the cover (13) towards the second, shorter, ramp (13.6) which runs downwards and is adjacent to the said step (13.7) so that, as the diaphragm support (10) is attached, the said fingers (14.4) are in sliding engagement firstly with the respective ascending ramps (13.5) and then, by continuing to rotate the head (14), with the respective descending ramps (13.6) of the front cams (13.4), before finally abutting against the end steps (13.7) which prevent the head (14) from rotating further.

3. Suction cup support according to Claim 1, characterized in that the said rotatable head (14) is prevented from slipping axially off the pin (12) by means of a stop ring (15) which is inserted in a corresponding groove (15.1) in the form of an arc of a circle around the pin (12).

4. Suction cup support according to Claim 1, characterized in that the said rotatable head (14) carries a plurality of arms (16) which essentially lie in a plane perpendicular to the axis of the pin (12).

5. Suction cup support according to Claim 1 or 2, characterized in that the said counter-hub (14.2) has two semicylindrical parts (14.3) which are axially symmetrical and similar to but mirror images of the respective front cams (13.4) of the said hub (13.2), each part (14.3) of the counter-hub (14.2) having a rigid axial finger (14.4) at its end furthest from the rotatable head (14).

6. Suction cup support according to Claim 1, characterized in that the said cover (13) is provided with a marker (a notch M) on its visible face, this marker being for example positioned at the top (i.e. at 12 o'clock) to indicate the correct position in which to apply the suction cup support in order to attach it to a wall or the like, so that, once it has been fixed, the support arms (16) will be in their correct position of use so that objects can be suspended from them.
